Europäisches Patentamt

European Patent Office

Office européen des brevets

(11) Numéro de publication: **0 235 472 B1**

## FASCICULE DE BREVET EUROPEEN

(45) Date de publication de fascicule du brevet:
**10.04.91**

(21) Numéro de dépôt: **86402395.7**

(22) Date de dépôt: **27.10.86**

(51) Int. Cl.5: **G05D 23/13**, F01P 7/16, F16K 11/065

(54) **Perfectionnements aux vannes mitigeuses thermostatiques pour circuits de refroidissement à liquide de moteurs à combustion interne.**

(30) Priorité: **28.10.85 FR 8515967**

(43) Date de publication de la demande:
**09.09.87 Bulletin 87/37**

(45) Mention de la délivrance du brevet:
**10.04.91 Bulletin 91/15**

(84) Etats contractants désignés:
**DE ES GB IT SE**

(56) Documents cités:
**FR-A- 714 947**
**FR-A- 2 174 134**
**FR-A- 2 254 717**
**FR-A- 2 434 723**

(73) Titulaire: **"Procédés VERNET" Société Anonyme dite:**
**21-27 route d'Arpajon**
**F-91290 Ollainville(FR)**

(72) Inventeur: **Cook, André**
**13 bis rue Marc Sangnier**
**F-91290 Arpajon(FR)**

(74) Mandataire: **Lemoine, Michel et al**
**Cabinet Michel Lemoine et Bernasconi 13**
**Boulevard des Batignolles**
**F-75008 Paris(FR)**

Rank Xerox (UK) Business Services

## Description

L' invention concerne une vanne mitigeuse thermostatique, pour circuits de refroidissenent à liquide de moteurs à combustion interne equipés d'un radiateur de refroidisenent et d'une pompe de circulation, laquelle vanne est destinée à être montée sur une dérivation, établie entre la canalisation du circuit conduisant au radiateur le liquide de refroidissement chaud qui sort du moteur et la canalisation ramenant au moteur le liquide de refroidissement froid qui sort du radiateur, laquelle vanne mitigeuse est agencée de façon à former un liquide tiède par mélange de proportions variables du susdit liquide chaud et du liquide froid qui sort du radiateur, laquelle vanne comporte une capsule à cire dilatable, de type connu, à boîtier et à piston, qui est sensible à la température de ce liquide tiède et qui détermine lesdites proportions, laquelle vanne comporte un corps creux cylindrique sur au moins une partie intérieure de sa longueur et un tiroir comportant une cloison transversale ajourée, déplaçable en translation parallèlement à un axe de translation coïncidant avec l'axe de la partie cylindrique par la susdite capsule à cire contre l'action d'un ressort et disposé à l'intérieur du corps dans la partie cylindrique de façon à fermer d'autant plus un orifice d'arrivée du liquide chaud et à ouvrir simultanément d'autant plus un orifice d'arrivée du liquide froid que la température du liquide tiède augmente, et vice versa, lesdits orifices étant ménagés dans le corps creux en y étant décalés parallèlement à l'axe de translation qui coïncide avec l'axe d'action de la capsule à cire, le corps étant obturé, à l'une de ses extrémités axiales, par une paroi transversale fixe mais démontable, et l'orifice de sortie étant situé à l'extrémité opposée du corps selon l'axe de la partie cylindrique.

C'est pour simplifier la terminologie qu'on utilise ici, pour désigner le même liquide dans des parties différentes du circuit de refroidissement, les expressions "liquide chaud", "liquide tiède" et "liquide froid", étant donné qu'elles reflètent bien les niveaux respectifs de temperature au cours du fonctionnement normal du moteur. Toutefois, on ne doit pas attacher à ces expressions un sens littéral car il existe par exemple des situations dans lesquelles les trois liquides sont à une même température (moteur arrêté depuis quelque temps) ou dans lesquelles le liquide dit "chaud" est à une température relativement basse (démarrage du moteur).

Une vanne mitigeuse du type défini en préambule est décrite dans le FR-A.2.254.717. Selon ce document, le boîtier de la capsule à cire est fixé sur une cloison transversale solidaire du corps de la vanne et le piston de la capsule à cire agit directement sur le tiroir, le susdit ressort étant interposé entre le tiroir et la susdite paroi transversale qui fait partie d'un couvercle démontable. En raison de la position du boîtier et du piston de la capsule à cire par rapport à la paroi transversale démontable et au ressort, il n'est possible de modifier le réglage d'une telle vanne qu'en enlevant le susdit couvercle afin de pouvoir remplacer le ressort par un ressort de caractéristiques différentes ou pour modifier le tarage de ce ressort par insertion d'une cale d'épaisseur calibrée.

L'invention a pour but de rendre ces vannes mitieuses telles que l'on puisse régler aisément leur action, de préférence en cours de fonctionnement.

A cet effet, la vanne mitigeuse conforme à l'invention est essentiellement caractérisée en ce que le piston de la capsule à cire prend appui sur la susdite paroi transversale du corps de vanne, vers laquelle il est sollicité par le ressort, et en ce que le boîtier de la capsule à cire est fixé coaxialement au tiroir et rigidement sur la cloison, de telle façon que le boîtier et le tiroir se déplacent ensemble sous l'action de la dilatation de la capsule.

De cette manière, il est possible de régler l'action de la vanne mitigeuse en agissant sur l'extrémité du piston, par exemple après avoir enlevé le couvercle démontable.

Il est à noter que le FR-A-2.434.723 décrit une vanne mitigeuse thermostatique associée à un circuit de refroidissement à liquide de moteurs à combustion interne mais agencée de façon à maintenir à une valeur de consigne la température de l'habitacle du véhicule mû par ce moteur, cet habitacle étant chauffé par de l'air refoulé à travers un échangeur qui est alimenté par du liquide prélevé sur le susdit circuit de refroidissement. Dans ce cas, le tiroir n'est capable de se déplacer qu'entre deux butées et il est donc prévu une liaison à ressort entre le boîtier de la capsule et le tiroir. Par ailleurs, l'orifice de sortie est situé latéralement par rapport au corps de la vanne.

De préférence, la vanne mitigeuse conforme à l'invention comprend des moyens pour régler en fonctionnement, par rapport au corps de vanne, la position du piston de la capsule à cire en fonction de paramètres extérieurs, ces moyens de réglage comprenant avantageusement, et de façon en soi connue (voir le FR-A-2.434.723), une deuxième capsule à cire, située à l'extérieur du corps de vanne, dont la température dépend d'au moins l'un de ces paramètres extérieurs. Dans ce dernier cas, il est judicieux que le boîtier de la deuxième capsule à cire soit solidaire de la paroi démontable et que le piston de cette deuxième capsule à cire traverse la paroi démontable avec interposition de moyens d'étanchéité de façon à toucher axialement le piston de la première capsule à cire.

Cet ensemble de caractéristiques simplifie la fabrication, facilite l'écoulement du liquide dans la vanne mitigeuse et permet à la première capsule à cire d'évaluer avec précision la température de l'eau tiède.

L'invention va être expliquée plus en détail à l'aide du dessin annexé qui en illustre un mode de réalisation préféré.

La figure 1 représente schématiquement un moteur à combustion interne dont le circuit de refroidissement est équipé d'une vanne mitigeuse conforme à ce mode de réalisation préféré.

La figure 2 représente la vanne mitigeuse de la figure 1, en coupe longitudinale à plus grande échelle.

La figure 3 est une coupe de la vanne mitigeuse selon la ligne III-III de la figure 2.

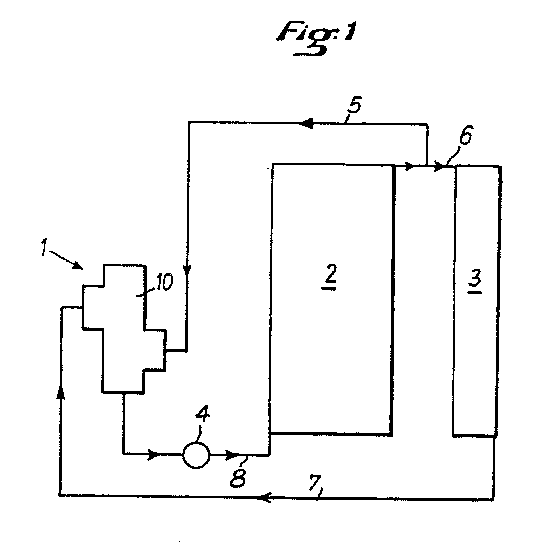

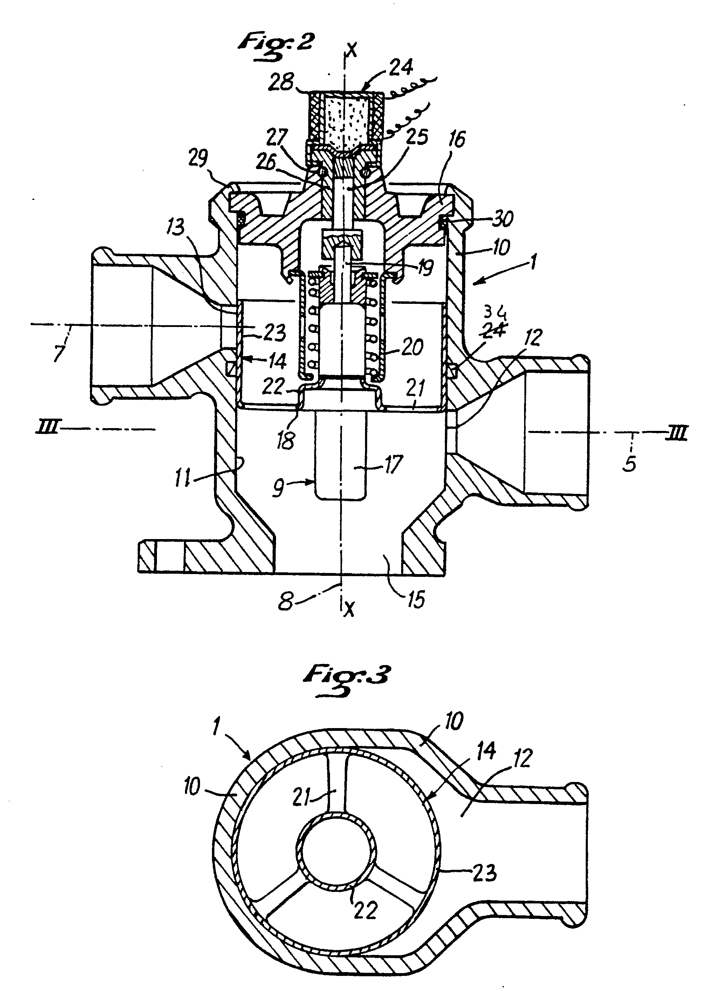

Ainsi qu'il ressort de la figure 1, l'invention concerne une vanne mitigeuse thermostatique 1 (dont les dimensions ont été exagérées sur cette figure) pour le circuit de refroidissement à liquide d'un moteur à combustion interne 2, ce circuit étant équipé d'un radiateur de refroidissement 3 et d'une pompe de circulation 4. La vanne mitigeuse 1 est montée sur une dérivation 5 établie entre la canalisation 6 du circuit conduisant au radiateur 3 le liquide de refroidissement chaud qui sort du moteur 2 et la canalisation 7, 8 ramenant au moteur 2 le liquide de refroidissement froid qui sort du radiateur 3. La pompe de circulation 4 est montée sur la partie 8 de la canalisation de retour 7, 8 qui est située en aval de la vanne mitigeuse 1. Celle-ci est agencée de façon à former, par mélange de proportions variables de liquide chaud (arrivant par la dérivation 5) et de liquide froid (arrivant par la partie de canalisation 7), un liquide tiède qui est ensuite introduit dans le moteur 2 (par l'intermédiaire de l'élément de canalisation 8). La vanne 1 comporte un organe thermostatique 9 (figure 2), sensible à la température du liquide tiède, qui détermine les proportions respectives de liquide chaud et de liquide froid dans le mélange sortant ou liquide tiède.

Comme montré aux figures 1 et 2, la vanne 1 comporte un corps 10 muni d'une partie intérieurement cylindrique 11 dans laquelle arrivent le liquide chaud et le liquide froid, respectivement par des orifices 12 et 13 qui sont décalés parallèlement à l'axe X-X de cette partie cylindrique 11. Le corps 10 peut posséder soit (comme représenté) un seul orifice 12 pour l'arrivée du liquide chaud, soit plusieurs orifices 12 débouchant dans un même plan transversal, c'est-à-dire un plan perpendiculaire à l'axe X-X. De même, il peut posséder soit (comme représenté) un seul orifice 13 pour l'arrivée du liquide froid, soit plusieurs orifices 13 débouchant dans un même plan transversal.

Un tiroir cylindrique 14, mobile en translation selon l'axe X-X et actionné par l'organe thermostatique 9, est disposé à l'intérieur de la partie cylindrique 11 de façon à fermer d'autant plus le ou les orifices d'arrivée de liquide chaud 12 et à ouvrir d'autant plus le ou les orifices d'arrivée de liquide froid 13 que la température du liquide tiède augmente, et vice versa.

Le corps 10 de la vanne 1 est en outre muni d'un orifice de sortie 15, pour le liquide tiède, à celle de ses extrémités axiales qui est la plus éloignée de l'orifice d'entrée 13 du liquide froid, c'est-à-dire à son extrémité inférieure selon la figure 2, et il est obturé, à son extrémité axiale opposée, par une paroi transversale 16 démontable servant d'appui à l'organe thermostatique 9.

L'organe thermostatique 9 est constitué par une capsule à cire dont le boîtier 17 est fixé sur une cloison transversale ajourée 18 du tiroir 14, avec un jeu transversal important à l'intérieur de la partie cylindrique 11 du corps 10 et coaxialement à cette partie 11, de façon à faire saillie du côté de l'orifice de sortie 15. En outre, le piston 19 de la capsule à cire prend appui sur la paroi transversale 16 du corps 10 vers laquelle il est sollicité par un ressort 20. La cloison transversale 18, qui peut être simplement constituée par des bras radiaux 21 réunissant un moyeu de fixation central 22 (pour la fixation du boîtier 17) à une jupe cylindrique 23, est faite d'une seule pièce avec le tiroir 14 et est placée à celle des extrémités axiales du tiroir 14 qui est la plus proche de l'orifice de sortie 15. Un joint d'étanchéité annulaire 34, monté dans une gorge ménagée dans la partie cylindrique 11 entre les orifices 12 et 13, coopère avec la jupe 23 du tiroir 14 pour empêcher des fuites de se produire le long de la surface extérieure de la jupe 23.

On obtient ainsi une vanne mitigeuse dont le fonctionnement est le suivant. Lorsque le moteur 2 est froid, le liquide dit "chaud" arrivant normalement du moteur 2 par la canalisation 5 à l'orifice 12 de la vanne 1 est en fait à la température ambiante, c'est-à-dire que sa température est relativement basse. De ce fait, l'organe thermostatique 9 est contracté et le tiroir 14 occupe, sous l'effet du ressort 20, sa position la plus haute, telle qu'elle est représentée à la figure 2. L'orifice 13 est donc fermé par la jupe 23, ce qui empêche l'eau de circuler dans le radiateur 3. En revanche, l'orifice 12 est ouvert en grand et le liquide de refroidissement, mis en circulation par la pompe 4, tourne entre le moteur 2 et la vanne 1 en passant par les canalisations 4 et 5 et en court-circuitant le radiateur 3.

Lorsqu'on lance le moteur et qu'on le fait tourner suffisamment longtemps, l'eau arrivant par l'orifice 12 se réchauffe progressivement en faisant se dilater l'organe thermostatique 9. Ceci provoque la descente du tiroir 14 (selon la figure 2) et par conséquent la fermeture progesssive de l'orifice 12 et l'ouverture progressive de l'orifice 13 par la jupe 23. Une proportion de plus en plus grande de l'eau froide venant du radiateur 3 par la canalisation 7 est ainsi admise par l'orifice 13, passe à l'intérieur de la jupe 23, puis entre les bras radiaux 21, et se mélange à l'eau chaude arrivant par l'orifice 12. L'eau chaude et l'eau froide se mélangent au niveau de l'organe thermostatique 9 qui produit ainsi une régulation automatique de la température de l'eau renvoyée au moteur 2 par la pompe 4.

Dans ce qui précède, on a supposé que la paroi transversale 16 du corps offrait un appui fixe à l'organe thermostatique 9. En variante, il est possible de prévoir des moyens pour régler, par rapport au corps 10, la position de l'organe thermostatique 9 et en particulier, lorsqu'il s'agit d'une capsule à cire, du piston 19 de cette capsule, en fonction de paramètres extérieurs.

De tels moyens sont alors avantageusement constitués par une deuxième capsule à cire 24 montée à l'extérieur du corps 10 et sensible à la température extérieure ou à la température régnant sous le capot du moteur 2. Comme montré à la figure 1, le boîtier de cette capsule à cire 24 peut être fixé directement à la paroi transversale 16 du corps 10 de façon que son piston 25 traverse cette paroi 16 à l'intérieur d'un guide 26, l'étanchéité avec l'extérieur étant assurée par un joint annulaire 27 qui coopère avec la surface extérieure de ce guide 26. Plus la température évaluée par la capsule à cire 24 augmente, plus son piston 25 descend (selon la figure 2) et repousse donc le piston 19 de la capsule à cire intérieure 9, ce qui décale la plage de fonctionnement de la vanne mitigeuse 1 en fonction de ladite température.

Au lieu d'être fixée à la paroi transversale 16 du corps 10, la capsule à cire extérieure 24 pourrait aussi être fixée à distance de cette paroi 16. Dans ce cas, il suffirait de placer, entre les pistons 19 et 25, une tige de transmission (non représentée) traversant la paroi transversale 16 comme on l'a représenté pour le piston 25 à la figure 2.

Dans les deux cas, la vanne mitigeuse 1 conforme à l'invention, en une version unique, pourrait s'adapter d'elle-même aux conditions de température qui sont définies, dans les spécifications techniques de certains constructeurs d'automobiles, comme conditions "arctiques", "tempérées" et "tropicales".

Selon une autre variante, la capsule à cire extérieure 24 pourrait être rendue sensible à au moins un paramètre de fonctionnement autre que la température de l'ambiance où elle est placée (par exemple, autre température, pression atmosphérique, etc.) grâce à la présence d'une résistance électrique 28 entourant le boîtier de la capsule à cire 24, ou revêtue d'une matière réfractaire et noyée dans la cire que contient ce boîtier. L'alimentation de cette résistance électrique 28 par des moyens automatiques (microprocesseurs, notamment) ou manuels, en fonction d'un ou plusieurs paramètres de fonctionnement, permet alors d'asservir le fonctionnement de la vanne mitigeuse à ce ou ces paramètres.

La fabrication du corps 10 par moulage, le montage du tiroir 14 et des éléments associés à celui-ci et l'adaptation de la vanne mitigeuse aux diverses variantes évoquées ci-dessus à titre d'exemple sont facilités par la constitution de la paroi transversale 16 par une pièce séparée et fixée au corps 10, par exemple à l'aide d'un rebord de sertissage 29, avec interposition d'un joint d'étanchéité 30.

Il est à noter que la construction de la vanne mitigeuse conforme à l'invention, à partir d'un tiroir, fait qu'elle est pratiquement équilibrée en pression, quelles que soient les pressions aux orifices 12 et 13 d'arrivée de liquide chaud et froid, contrairement aux constructions des FR-A-2.434.723 et 1.472.712.

Selon une variante, la résistance électrique 28 peut être une thermistance à coefficient de température positif (CTP). Les paramètres qui influent sur l'alimentation de la résistance électrique 28 peuvent être, par exemple, l'un au moins des suivants : température de l'air extérieur, température régnant sous le capot du moteur, pression atmosphérique, charge du moteur, etc... et avoir une action par tout ou rien ou une action proportionnelle.

**Revendications**

1. Vanne mitigeuse thermostatique (1), pour circuits de refroidissenent à liquide de noteurs à combustion interne (2) équipés d'un radiateur de refroidisement (3) et d'une pompe de circulation (4), laquelle vanne (1) est destinée à être montée sur une derivation (5), établie entre la canalisation (6) du circuit conduisant au radiateur (3) le liquide de refroidissement chaud qui sort du moteur (2) et la canalisation (7, 8) ramenant au moteur (2) le liquide de refroidissement froid qui sort du radiateur (3), laquelle vanne mitigeuse (1) est agencée de façon à former un liquide tiède par mélange de proportions variables du susdit liquide chaud et du liquide froid qui sort du radiateur (3), laquelle vanne (1) comporte une capsule à cire dilatable (9), de type connu, a boîtier (17) et à piston (19), qui est sensible à la température de ce liquide tiède et qui détermine lesdites proportions, laquelle vanne (1) comporte un corps creux (10) cylindrique sur au moins une partie intérieure de sa longueur et un tiroir (14) comportant une cloison transversale ajourée (18), déplaçable en translation parallèlement à un axe de translation (X-X) coïncidant avec l'axe de la partie cylindrique par la susdite capsule à cire (9) contre l'action d'un ressort (20) et dispose à l'intérieur du corps (10) dans la partie cylindrique de façon à fermer d'autant plus un orifice d'arrivée du liquide chaud (12) et à ouvrir simultanément d'autant plus un orifice d'arrivée du liquide froid (13) que la température du liquide tiéde augmente, et vice versa, lesdits oriiices (12, 13) étant ménagés dans le corps creux (10) en y étant décalés parallèlement à l 'axe de translation (X-X) qui coïncide avec l'axe d'action de la capsule à cire (9), le corps (10) étant obturé, à l'une de ses extremités axiales, par une paroi transversale fixe mais démontable (16), et l'orifice de sortie (15) étant situé à l'extrémité opposée du corps selon l'axe (X-X) de la partie cylindrique,

caractérisée en ce que le piston (19) de la capsule a cire (9) prend appui sur la susdite paroi transversale (16) du corps de vanne (10), vers laquelle il est sollicité par le ressort (20), et en ce que le boîtier (17) de la capsule à cire (9) est fixé coaxialement au tiroir (14) et rigidement sur la cloison (18), de telle façon que le boîtier (l7) et le tiroir (14) se déplacent ensemble sous l'action de la dilatation de la capsule (9).

2. Vanne mitigeuse selon la revendication 1, caractérisée en ce qu'elle comprend des moyens pour régler en fonctionnement, par rapport au corps (10), la position du piston (19) de la capsule à cire (9) en fonction de paramètre extérieurs.

3. Vanne mitigeuse selon la revendication 2, caractérisée en ce que les moyens de réglage de la position du piston (19) de la capsule à cire (9) comprennent une deuxième capsule à cire (24) située à l'extérieur du corps de vanne (10).

4. Vanne mitigeuse selon la revendication 3, caractérisée en ce que le boîtier de la deuxième capsule à cire (24) est solidaire de la paroi démontable (16) et en ce que le piston (25) de cette deuxième capsule à cire (24) traverse la paroi démontable (16) avec interposition de moyens d'étanchéité (27) de façon à toucher axialement le piston (19) de la première capsule à cire (9)

5. Vanne mitigeuse selon la revendication 4, caractérisée en ce que les moyens d' étanchéité (27) sont disposés entre la paroi démontable (16) et un guide tubulaire (26) dans lequel le piston (25) de la deuxième capsule à cire (24) est monté coulissant.

6. Vanne mitieuse selon l'une quelconque des revendications 1 à 5, caractérisée en ce que la cloison transversale (18) est constituée par des bras radiaux (21) réunissant un moyeu de fixation central (22) à une jupe cylindrique (23).

7. Vanne mitigeuse selon l'une quelconque des revendications 1 à 6, caractérisée en ce que la cloison transversale (18 ou 21) à laquelle est fixé le boîtier (17) de la capsule à cire (9) est faite d'une seule pièce avec le tiroir (14) et est placée à celle des extrémités axiales de ce dernier qui est la plus proche de l'orifice de sortie (15) du liquide tiède.

## Claims

1. A thermostatically controlled mixing valve (1) for liquid cooling circuits fitted with a circulation pump (4) and a cooling radiator (3), and used with internal combustion engines (2). The mixing valve (1) is intended for mounting onto a by-pass (5) between the hose (6) carrying hot coolant from the engine (2) to the radiator (3) and the cooled coolant from the radiator (3) to the engine (2) via a hose (7/8). The mixing valve (1) is designed so that warm coolant is obtained by mixing varying proportions of the hot and cold coolant leaving the engine (2) and radiator (3) respectively. The mixing valve (1) is fitted with a known type of capsule element (9) comprised of a casing (17) and a piston (19), which is sensitive to the warm coolant's temperature and which also determines the proportions of hot and cold coolant. The mixing valve (1) consists of a valve body (1O) with a cylindrical chamber equal to or greater than half its length, and a slide valve (14) consisting of a perforated transversal partition (18). The slide valve is moved parallel to the axis (X-X) of the cylindrical chamber, against a spring (20), by the wax capsule (9). The slide valve is situated inside the cylindrical chamber of the valve body (10) and is used to close the hot coolant inlet (12) and open the cold coolant inlet (13) simultaneously and in proportion to the increase in temperature of the warm coolant. A temperature decrease will initiate the converse action. The inlets (12, 13) inside the hollow body (10) are positioned in order that they are parallel and offset to the displacement axis (X-X) which is also·the movement axis of the wax capsule element (9). The body (10) is stoppered at one of its axial ends by a fixed removable transversal membrane (16) and the outlet (15) is located at the opposite end of the body along the cylindrical chamber's axis (X-X), characterised in that the piston (19) of the wax capsule element (9) rests against the above-mentioned transversal membrane (16) of the valve body (10) and against which it is pressed by the spring (20), and by the casing (17) of the wax capsule element (9) being coaxially fixed to the slide valve (14) and rigidly mounted to the partition (18), such that the casing (17) and the slide valve (14) both move on expansion of the capsule element (9).

2. Mixing valve as per claim 1, characterised in that it has a method of adjustment of the positioning of the piston (19) of the wax capsule element (9) in relation to the valve body (10), during operation and as a function of external factors.

3. Mixing valve as per claim 2, characterised in that it offers a method of adjustment of the positioning of the piston (19) of the wax capsule element (9) which comprises a second wax capsule element (24) positioned outside the valve body (10).

4. Mixing valve as per claim 3, characterised in that the casing of the second wax capsule element (24) is integral with the removable membrane (16) and by the piston (25) of this second wax capsule element (24) passing through the removable membrane (16) and axially touching the piston (19) of the first wax capsule element (9 ) , and with the piston-membrane junction being fully sealed.

5. Mixing valve as per claim 4, characterised in that the sealing components (27) are fitted between the removable membrane (16) and a tubular guide (26) in which the piston (25) of the second wax capsule element (24) is slide mounted.

6. Mixing valve as per any one of claims 1 to 5, characterised in that it has a transversal partition (18) consisting of radial arms (21) joining a central fixation hub (22) to a cylindrical skirt (23).

7. Mixing valve as per any one of claims 1 to 6, characterised in that it has a transversal partition (18 or 21), to which is fitted the casing (17) of the wax capsule element (9), constituting, together with the slide valve (14); a single piece component, and positioned at the extreme axial end of the latter which is closest to the warm coolant outlet (15).

## Ansprüche

1. Mischungsthermostatventil (1) für den Kühlflüssigkeitskreislauf bei Verbrennungsmotoren (2), die mit einem Kühler (3) und einer Umwälzpumpe (4) ausgestattet sind, hierbei ist das Ventil (1) zum Einbau in einer Zweigleitung (5) bestimmt, die zwischen der Leitung (6) des Kreislaufes, die die warme, aus dem Motor (2) herauskommende Kühlflüssigkeit zum Kühler (3) führt, und der Leitung (7,8) angeordnet ist, die die kalte vom Kühler (3) kommende Kühlflüssigkeit zum Motor (2) zurückführt, wobei jenes Mischventil (1) so eingerichtet ist, daß eine lauwarme Flüssigkeit durch Mischen in veränderlichen Proportionen von warmer Flüssigkeit und von kalter, vom Kühler (3) herauskommender Flüssigkeit gebildet wird, hierbei enthält jenes Ventil (1) eine Kapsel mit dehnbarem Wachs (9) üblicher Bauart, mit einem Gehäuse (17) und einem Kolben (19), die auf der Temperatur jener lauwarmen Flüssigkeit empfindlich ist und die Mischproportionen bestimmt, hierbei enthält das Ventil (1) einen Hohlkörper (10), der auf wenigstens einem Teil seiner inneren Länge zylindrisch ist, und einem Schieber (14), der eine gelochte, querliegende Trennwand (18) enthält, wobei der Schieber parallel zur Bewegungsachse (X-X), die mit der Achse des zylindrischen Teils übereinstimmt, bewegt werden kann durch die Wachskapsel (9) gegen den Druck einer Feder (20), und so im Körper (10) im zylin-drischen Teil eingelegt ist, daß die Einmündung der warmen Flüssigkeit (12) um so mehr geschlossen wird, und die Einmündung der kalten Flüssigkeit (13) gleichzeitig um so mehr geöffnet wird, desto höher die Temperatur der lauwarmen Flüssigkeit steigt und umgekehrt, hierbei sind die Einmündungen (12, 13) am Hohlkörper (10) versetzt angebracht, parallel zur flewegungsachse (X-X), die mit der Wirkungsachse der Wachskapsel (9) übereinstimmt, wobei der Hohlkörper (10) an einem seiner Enden an der Achse durch eine querliegende, feste, aber abnehmbare Querwand (16) begrenzt ist, und die Austrittsmündung (15) am gegengesetzten Ende der Achse (X-X) des zylindrischen Teiles des Hohlkörpers angebracht ist,
**dadurch gekennzeichnet,**
daß der Kolben (19) der Wachskapsel (9) sich auf die Querwand (16) des Ventilkörpers stützt, zu welcher er von der Feder (20) gedrückt wird, und daß das Gehäuse (17) der Wachskapsel (9) in der Achsrichtung des Schiebers (14) fest auf der Trennwand (18) eingebaut ist, so daß das Gehäuse (17) und der Schieber (14) sich gemeinsam durch die Wirkung der Ausdehnung der Wachskapsel (9) bewegen.

2. Mischventil nach Anspruch 1, dadurch gekennzeichnet, daß es Mittel enthält, um während des Betriebes durch Bezug auf den Körper (10) die Lage des Kolbens (19) der Wachskapsel (9) in Abhängigkeit äußerer Parameter einzustellen.

3. Mischventil nach Anspruch 2, dadurch gekennzeichnet, daß die Einstellmittel der Lage des Kolbens (19) der Wachskapsel (9) eine außerhalb des Ventilkörpers (10) angebrachte zweite Wachskapsel (24) enthalten.

4. Mischventil nach Anspruch 3, dadurch gekennzeichnet, daß das Gehäuse der zweiten Wachskapsel (24) mit der abnehmbaren Querwand (16) fest verbunden ist und, daß der Kolben (25) dieser zweiten Wachskapsel (24) die abnehmbare Querwand (16) mit dazwischen gelegenen Dichtungsmitteln (27) durchstößt, so daß er in der Achsrichtung den Kolben (19) der ersten Wachskapsel (9) berührt.

5. Mischventil nach Anspruch 4, dadurch gekennzeichnet, daß die Dichtungsmittel (27) zwischen der abnehmbaren Querwand (16) und einer röhrenförmigen Führung (26) eingelegt sind, in welcher der Kolben (25) der zweiten Wachskapsel (24) verschiebbar eingebaut ist.

6. Mischventil nach einem der Ansprüche 1 bis 5, dadurch gekennzeichnet, daß die querliegende Trennwand (18) aus strahlenförmig angeordneten Armen (21) besteht, die einen zentralen Befestigungsbereich (22) mit einem zylindrischen Wandbereich (23) verbindet.

7. Mischventil nach einem der Ansprüche 1 bis 6, dadurch gekennzeichnet, daß die querliegende Trennwand (18 oder 21), an der das Gehäuse (17) der Wachskapsel (9) befestigt ist, einseitig mit dem Schieber (14) ausgebildet ist und an dem Achsende dieses Schiebers angebracht ist, das am nächsten zur Ausgangsmündung (15) der lauwarmen Flüssigkeit liegt.

## Fig. 1

Fig:2

Fig:3